Europäisches Patentamt

European Patent Office

Office européen des brevets

(11) Publication number: **0 092 631**
**A1**

## (12) EUROPEAN PATENT APPLICATION

(21) Application number: **82830105.1**

(22) Date of filing: **22.04.82**

(51) Int. Cl.³: **F 24 B 1/20**
**A 21 B 1/04, A 21 B 1/52**

(43) Date of publication of application:
**02.11.83 Bulletin 83/44**

(84) Designated Contracting States:
**DE FR GB IT**

(71) Applicant: **D'Agosto, Antonio**
**Via San Biagio in Cascheri, 119**
**I-51100 Pistoia(IT)**

(72) Inventor: **D'Agosto, Antonio**
**Via San Biagio in Cascheri, 119**
**I-51100 Pistoia(IT)**

(74) Representative: **Fontana, Sergio**
**c/o Studio Köhler Fontana Via G. Calderini, 19**
**I-00196 Roma(IT)**

(54) **Wood oven functional in moving vehicles.**

(57) The oven (F) consists of a cage in metal angle bars (1) with the bottom incorporated in a reinforced concrete slab (2). The slab (2) is protected from the effects of the charcoal fire by a layer (3) of concrete and sand conglomerate, which is covered with a layer (4) of firebrick. Two layers of firebrick (5) make up the inside of the oven, with the dome (6) covered with a layer (6') of concrete and sand conglomerate and resting on them. The spaces between the dome, the firebrick inner sides (5) and the firebrick outer sides are filled with clay (7). A layer of plaster covers the outer (5') firebrick.

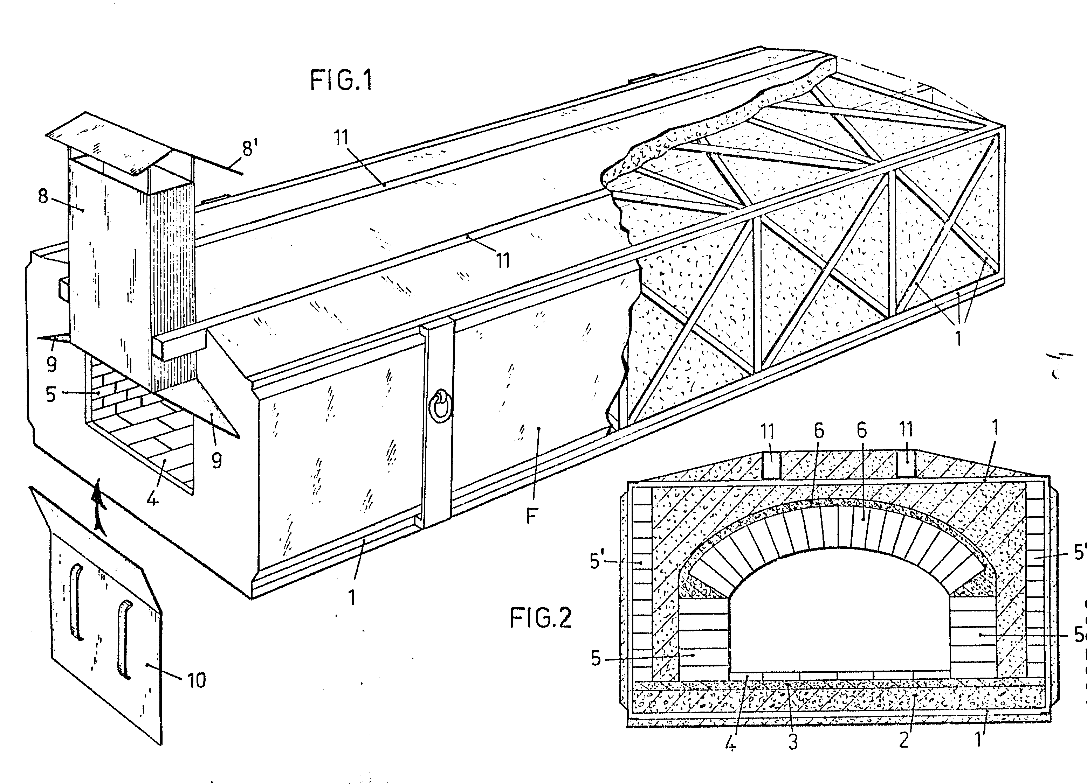

The oven (F) is hoisted onto a prefitted vehicle with no anchoring. Its rectangular shape, wood fire, and strong compact structure allow itinerant preparation and sale of particularly delicate alimentary paste (pizza), with no damage or deterioration due to the motion of the vehicle, even over uneven terrain (fig. 2).

FIG.2

## Wood oven functional in moving vehicles

Antonio D'AGOSTO, Pistoia, Italy

This invention concerns a wood-fired oven which can operate in moving vehicles.

Moveable kitchens are widely known. For this purpose they are generally of modest size and designed to heat various containers which are placed in it one after another, using the same heat source.

The preparation of certain dishes requiring particularly delicate treatment, pizza for instance, requires that the oven used be wood-fired. Moreover, to achieve sufficient output for itinerant production and sale of these dishes, the oven must be large enough to be of high capacity. Despite its size, it must not be effected by the continuous motion of the vehicle, even by the uneven terrain the vehicle may encounter.

Wood-fired ovens are currently round or at least semicircular in shape. However this shape gives rise to two inconveniences in terms of this invention. The first is that in placing such an oven on a vehicle like a truck its maximum capacity is determined by its diameter, which can at most be as wide as the bed of the truck, to the complete detriment of the production. The second disadvantage in the applicant's view is that in a semicircular wood oven the flame tends to form a whirlpool in a static and constant position. Said static constant position tends to burn rather than properly cook the dishes to be treated.

Finally, currently known wood burning ovens are not really ready to use, but must be assembled on site, especially with regard to the brick·work. This is because during transport, the brick work part may settle, or even be staggered, to make the oven unusable.

The aim of this invention is an oven for producing products which require delicate cooking, like pizza, which can be mounted on a vehicle for the itinerant production and sale of these goods.

The invention aims to realize a rectangular wood-burning oven of considerable size, suitable for a high production and commercial output, which can be mounted on a vehicle completely ready for use and which is strong enough in structure to withstand the continual motion of the vehicle and especially the uneven terrain which the vehicle may encounter.

The invention satisfies these requirements with a rectangular wood-burning oven consisting of:
- a latticework cage made of metal angle bars, with the bottom incorporated in a reinforced concrete slab, protected from the effects of the charcoal fire by a layer of concrete and sand conglomerate and another of firebricks;

- two rows of firebrick to form the interior walls, at a certain distance from two other rows which form the exterior walls, in contact with the sides of the metal cage;

- a firebrick dome placed on said rows of firebrick forming the inner walls;

- a protective layer of sand and concrete conglomerate to cover the dome;

- a clay filling between said dome, said inner walls and said outer walls;

- a layer of plaster to cover the outer structure.

The fundamental concept of the invention thus lies in the realization of a rectilinear wood-burning oven which despite its considerable size can operate on a continuously moving vehicle without damaging its output.

According to the invention, the rectilinear shape of the oven causes the flames from the wood and charcoal to 'run' along towards the opening of the oven, to uniformly and constantly lap the surface of the products being cooked. This leads to a natural and gradual cooking, unlike that which occurs in a round oven where the flame tends to burn rather than cook the food. A rectilinear wood-burning fireplace is particualrly good for pizza, which differs from other alimentary pastes and requires optimal cooking conditions since it is delicate and difficult to cook.

The oven according to this invention, as described below, can stand up to any requirements placed by a moving vehicle, even on uneven surfaces, both because of its metal cage and because of its reinforced concrete slab and its clay packing to contribute to its compactness and stability. Moreover, because of the metal cage and the reinforced concrete slab, the oven can be delivered in a completely finished condition, with no on-site assembly required.

The invention also provides that the firebrick comprising said inner sides of the oven be laid lengthwise rather than on edge, with their longest side perpendicular to the length of the oven, to provide better heat retention.

The object according to the invention is described in detail below with reference to a preferred embodiment represented in an exemplificative and non-limiting way in the attached drawings, with the following figures:
figure 1, a prospective view of a wood burning oven according to the invention, in part covered with plaster and in part not to show the lattice-work frame;
figure 2, a cross section of the oven in figure 1, showing the various layers of brickwork and packing;
figure 3, a side view of the oven according to the invention, placed on a truck;
figure 4, a rear view of the oven in operation.

Figure 1 shows the framework 1 of the oven F according to the invention, realized as an actual support cage, consisting of metal angle bars.

Figure 2 shows how the bottom of the oven is a reinforced concrete slab 2 in which the bottom of lattice-work frame 1 is incorporated. A layer of sand and concrete conglomerate 3 is shown, on reinforced concrete slab 2, to protect it from the effects of the charcoal. Firebricks 4 are arranged on layer 3, such that the inner sides of the oven run along their sides, made of firebricks 5 laid lengthwise rather than on edge, with the longer side perpendicular to the length of the oven F. The dome 6 rests on the two sides made of firebrick, and said dome is covered with a layer 6' of concrete and sand conglomerate. An external side of firebrick 5' is arranged at a distance from each inner side of firebrick 5, with the long edge of the brick parallel to the length of the oven.

The space between the inner sides 5, the dome 6 covered with layer 6' of sand and concrete, and the outer sides 5' in contact with the lattice-work cage 1 is then filled with clay. The outer sides 5' are covered with a layer of plaster, clearly visible in figure 1. On the upper surface of the oven two longitudinal spars 11 are joined parallel to its length, protruding from the side of the oven opening. Chimney 8 is placed between these spars 11 with the edges 9 on the sides, said chimney being outside oven F in direct contact with its opening. A door 10 serves to close the oven opening when necessary. One of the slopes of the oven 8' is lengthened so it comes into contact with the roof of the vehicle T' described below. The clay packing 7 is further raised along spars 11, in the center, and to the slopes on the sides.

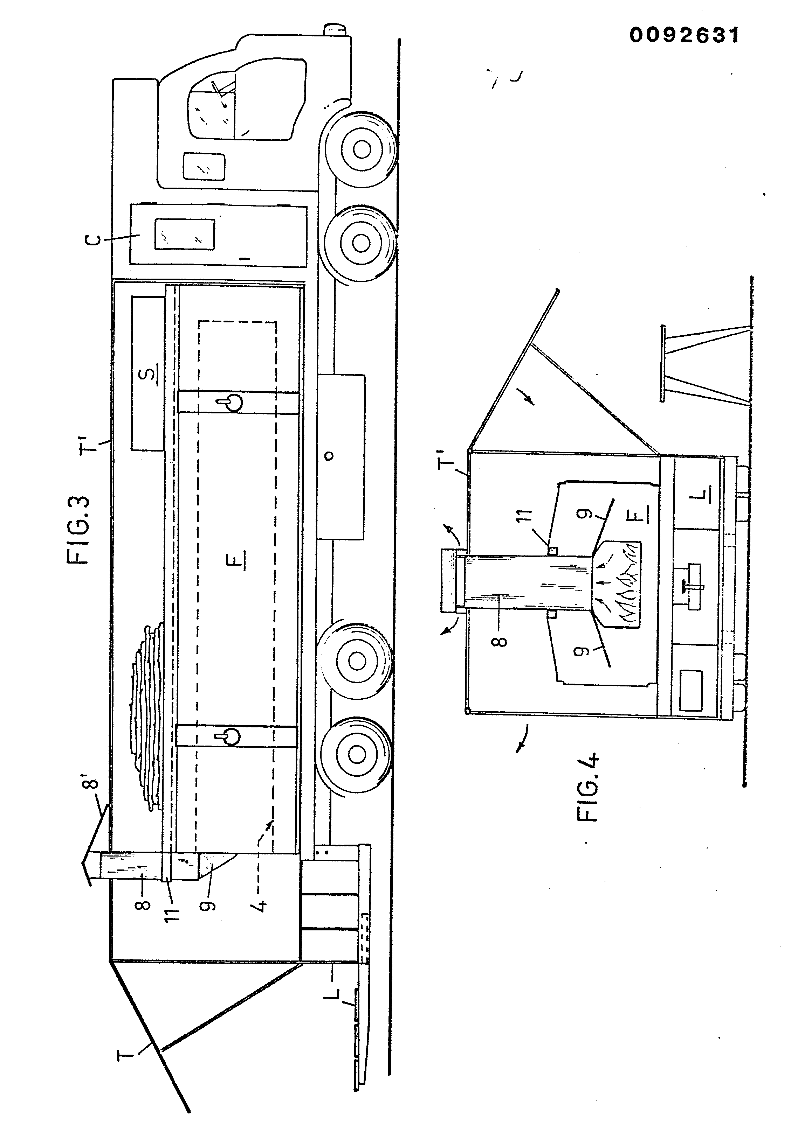

Said oven is ready for use and is hoisted and placed, with no anchoring, on the bed of a truck, as shown in figure 3. It keeps its position even in motion because of its weight, which offers considerable advantages in terms of safety in case of accidents.

As an example, a widely tested form of the oven as shown in the figures weighs 10 metric tons, is 4.60 meters long, 2 meters wide and 1 meter high.

Once it is placed on the vehicle, the oven is charged with sufficient wood for the planned hours of operation. Once the wood is lit, the operator can go to the site for production and sale. Approximately 2 hours are required before the oven is ready for use. This heating time can be used to move the vehicle.

Figure 3 shows how the vehicle may be equipped with a known reversible rear roof T, and with known reversible side panels, as shown in figure 4 on the right side. A small stand L may be attached to the rear of the truck to facilitate cutting and sales operations. The same vehicle is equipped with a tank S for water and a chamber C for the mixture. The wood supply may be placed on the top of the oven. A protective roof T' is provided from the driver's cab to the chimney 8, on which slope 8' of the chimney is placed. This position of the slope 8' directs the smoke coming out towards the rear, a fact of particular importance while the vehicle is in motion.

Of course the proportions and sizes of the oven and vehicle may be varied without going beyond the limits of this invention.

Claims:

1.  Wood-burning oven which can operate on vehicles in motion, characterized by a rectangular shape and by a structure consisting of:

- a lattice-work cage (1) made of metal angle bars, with the bottom incorporated in a reinforced concrete slab (2), protected from the effects of the charcoal fire by a layer of concrete and sand conglomerate (3) and another of firebrick (4);

- two rows of firebrick (5) to form the inner walls, at a certain distance from two other rows (5' ) which form the outer walls, in contact with the sides of the metal cage;

- a firebrick dome (6) placed on said rows of firebrick (5) forming the inner walls;

- a protective layer of sand and concrete conglomerate (6') covering the dome;

- a clay filling (7) between said dome (6), said inner walls (5) and said outer walls (5');

- a layer of plaster to cover the outer structure.

2. Wood-burning oven as claimed in claim 1, characterized in that the firebrick (5) comprising said inner sides of the oven are laid lengthwise rather than on edge, with their longest side perpendicular to the length of the oven (F).

3. Wood-burning oven as claimed in claim 1, characterized in that the slope (8') of the chimney (8) placed at the opening of the oven is extended until it comes in contact with the roof (T') of the vehicle.

4. Wood-burning oven as claimed in claims 1 to 3, characterized in that two longitudinal spars (11) are joined parallel to its length, protruding from the side of the oven opening for placing the chimney (8).

5. Wood-burning oven as claimed in claim 4, characterized in that the clay filling is raised at the level of the spars (11) and then covered with concrete and sand conglomerate, on a plane between the spars (11) and sloping from their sides.

6. Operative combination of a vehicle in motion with an oven as claimed in claims 1 to 5, characterized in that the oven is placed with no anchoring and complete in every way on the bed of the vehicle.

FIG.1

FIG.2

0092631

0092631

FIG.3

FIG.4

European Patent
Office

**EUROPEAN SEARCH REPORT**

Application number

EP 82 83 0105

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | CH-A- 87 556 (LORENZ) <br> *The whole document* | 1 | F 24 B 1/20 <br> A 21 B 1/04 <br> A 21 B 1/52 |
| A | FR-A-1 079 726 (LUC) <br> *Figure 3* | 1 | |
| A | FR-A-2 423 371 (USINES DE ROSIERES) <br> *Page 6, lines 1-6; figures 1,2* | 1 | |

| | |
|---|---|
| | TECHNICAL FIELDS SEARCHED (Int. Cl. ³) |
| | F 24 B <br> A 21 B <br> B 60 P |

The present search report has been drawn up for all claims

| Place of search <br> THE HAGUE | Date of completion of the search <br> 04-01-1983 | Examiner <br> VANHEUSDEN J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82